# EUROPEAN PATENT APPLICATION

(11) **EP 1 715 651 A2**
(43) Date of publication of application: **25.10.2006**
(21) Application number: 06112768.4
(22) Date of filing: 19.04.2006
(51) Int. Cl.: H04L 29/06

(54) **Method and apparatus for enabling local survivability during network disruptions**

(30) Priority: 19.04.2005 US 109105
(71) Applicant: AT&T Corp., New York, NY 10013-2412 (US)
(72) Inventor: Croak, Marian, Fair Haven, CA 07704 (US); Eslambolchi, Hossein, Los Altos Hills, CA 94022 (US)
(74) Representative: Asquith, Julian Peter

(57) **Abstract**

A method and apparatus for enabling a network-based solution for enterprise customers that is integrated with premise-based equipment is disclosed. The premise-based solution can be quickly enabled in the event that the primary network, e.g., VolP network, connectivity is lost. The premise-based equipment, e.g. a VolP switch, can be minimally configured and equipped to play the role of a hot standby proxy for network based VolP services if connection to the primary VolP network is lost. Intelligent services typically accessed in network based VolP services can be enabled on the premise equipment and VolP gateways to an alternate network, e.g., a WAN or a PSTN, can be activated. Network operators can remotely activate this equipment on behalf of the enterprise customer until the primary network connection is restored.

## Description

The present invention relates generally to communication networks and, more particularly, to a method and apparatus for enabling local survivability during network disruptions using premise based solutions, e.g., VolP solutions, in packet networks, e.g. Voice over Internet Protocol (VolP) networks.

### BACKGROUND OF THE INVENTION

Large enterprises have traditionally relied on network carriers to provide many of their telephony services. As telephony services become more IP centric and network intelligence is distributed more to endpoint components, enterprises are re-examining their relationships with carriers. Some enterprise customers are choosing to rely primarily on premise based VoIP solutions to support intra-company voice communications and use carrier network services only for Internet Protocol (IP) transport between company locations. These premise based VolP solutions preclude access to innovative VolP network services and are costly and difficult to operate and maintain.

Therefore, a need exists for a method and apparatus for enabling local survivability during network disruptions using premise based solutions, e.g., VolP solutions in packet networks, e.g., VolP networks.

### SUMMARY OF THE INVENTION

In one embodiment, the present invention enables a network-based solution for enterprise customers, where the solution is integrated with premise-based equipment, e.g., VoIP equipment. The premise-based solution can be quickly enabled in the event that the primary VoIP network connectivity is lost. The premise-based equipment, e.g. a VoIP switch, can be minimally configured and equipped to play the role of a hot standby proxy for network based VoIP services if connection to the primary VoIP network is lost. Intelligent services typically accessed in network based VolP services can be enabled on the premise equipment and VolP gateways to the PSTN can be activated. Network operators can remotely activate this equipment on behalf of the enterprise customer until the primary VolP network connection is restored.

### BRIEF DESCRIPTION OF THE DRAWINGS

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of enabling intra-company voice communication survivability during network disruptions using premise based VoIP solutions in a VoIP network of the present invention;

FIG. 3 illustrates a flowchart of a method for enabling intra-company voice communication survivability during network disruptions using premise based VoIP solutions in a VoIP network of the present invention; and

FIG. 4 illustrates a high level block diagram of a general purpose computer suitable for use in performing the functions described herein.

To facilitate understanding, identical reference numerals have been used, where possible, to designate identical elements that are common to the figures.

### DETAILED DESCRIPTION

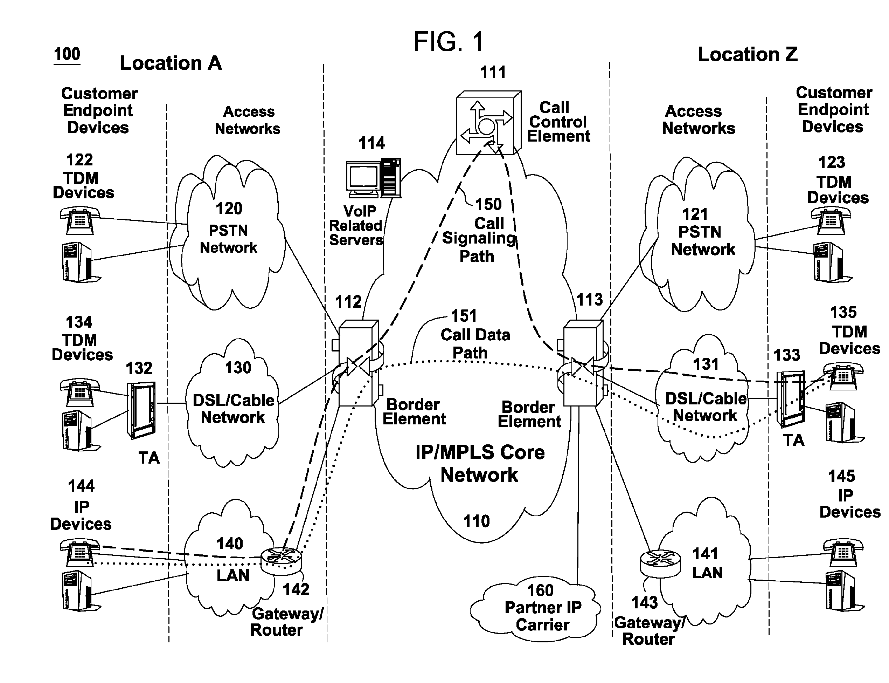

To better understand the present invention, FIG. 1 illustrates an example network, e.g., a packet network such as a VolP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VolP network or a SolP (Service over Internet Protocol) network is considered an IP network.

In one embodiment, the VoIP network may comprise various types of customer endpoint devices connected via various types of access networks to a carrier (a service provider) VoIP core infrastructure over an Internet Protocol/Multi-Protocol Label Switching (IP/MPLS) based core backbone network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and 145 typically comprise IP phones or PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VolP services by using either a Public Switched Telephone Network (PSTN) 120, 121 or a broadband access network via a TA 132 or 133. IP based customer endpoint devices access VolP services by using a Local Area Network (LAN) 140 and 141 with a VolP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VolP gateway and router 142. A packet based access network 130 or 131, such as DSL or Cable, when used together with a TA 132 or 133, is used to support TDM based customer endpoint devices.

The core VoIP infrastructure comprises of several key VoIP components, such the Border Element (BE) 112 and 113, the Call Control Element (CCE) 111, and VoIP related servers 114. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VolP related servers in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VolP calls, they can be handled via the Partner IP carrier interface 160 to the other carrier.

In order to illustrate how the different components operate to support a VolP call, the following call scenario is used to illustrate how a VolP call is setup between two customer endpoints. A customer using IP device 144 at location A places a call to another customer at location Z using TDM device 135. During the call setup, a setup signaling message is sent from IP device 144, through the LAN 140, the VolP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VoIP service related server 114 to obtain the information to complete this call. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP-ACK message if SIP is used, is sent in the reverse direction back to the CCE 111. After the CCE 111 receives the call acknowledgement message, it will then send a call acknowledgement signaling message, such as a SIP-ACK message if SIP is used, toward the calling party. In addition, the CCE 111 also provides the necessary information of the call to both BE 112 and BE 113 so that the call data exchange can proceed directly between BE 112 and BE 113. The call signaling path 150 and the call data path 151 are illustratively shown in FIG. 1. Note that the call signaling path and the call data path are different because once a call has been setup up between two endpoints, the CCE 111 does not need to be in the data path for actual direct data exchange.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

Large enterprises have traditionally relied on network carriers to provide many of their telephony services. As telephony services become more IP centric and network intelligence is distributed more to endpoint components, enterprises are re-examining their relationships with carriers. Some enterprise customers are choosing to rely primarily on premise based solutions, e.g., VoIP solutions, to support intra-company voice communications and use carrier network services only for Internet Protocol (IP) transport between company locations. These premise based VolP solutions preclude access to innovative VolP network services and are costly and difficult to operate and maintain. However, these premise based solutions, when used in conjunction with network based VoIP services, can enable local survivability, e.g., intra-company voice communication survivability, in the event of VoIP network failures.

To address this need, in one embodiment the present invention enables a network-based solution for enterprise customers that is integrated with premise-based VoIP equipment. The premise-based solution can be quickly enabled in the event that the primary VoIP network connectivity is lost. The premise-based equipment, e.g. a VoIP switch, can be minimally configured and equipped to play the role of a hot standby proxy for network based VoIP services if connection to the primary VoIP network is lost. Intelligent services typically accessed in network based VoIP services can be enabled on the premise equipment and VolP gateways to the PSTN can be activated. Network operators can remotely activate this equipment on behalf of the enterprise customer until the primary VoIP network connection is restored.

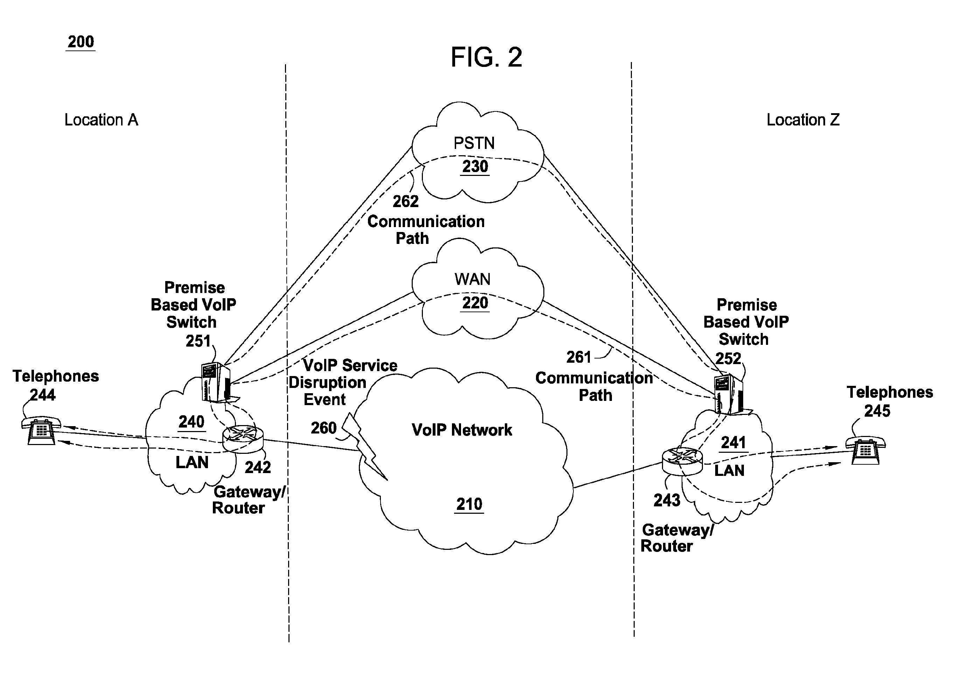

FIG. 2 illustrates an example of enabling local survivability, e.g., intra-company voice communication survivability, during network disruptions using premise based VolP solutions in a VolP network. In FIG. 2, an enterprise or a company has two locations, location A and location Z. During normal operating conditions, the two locations use VolP network 210 for providing services, e.g., voice communication. Within each location, a premise based VolP switch is also installed and maintained by the VolP network provider to provide backup voice communications between the two locations if VolP network service supported by VolP network 210 is disrupted. The two premise based VolP switches, switch 251 and switch 252, are connected by a corporate Wide Area Network (WAN) 220 (an alternate communication network) and/or a PSTN network 230 (an alternate communication network). In one embodiment, the use of PSTN 230 is particularly important if the company uses the same network provider for both WAN and VoIP services. It is possible that a network failure event may affect both the WAN and the VoIP services of the same network provider; therefore, the PSTN connection becomes a viable option to ensure continuous voice communications between different locations of the company.

In one example, a VolP service disrupting event 260 has prevented the use of the primary VolP network 210 to complete calls between the two company locations. Once the service disruption has been detected, the network provider of the VoIP network 210 immediately activates premise based VoIP switches, 251 and 252, to ensure continuous voice communication between the two locations. For example, intra-enterprise calls are redirected by premise based Internet Protocol routers 242 and 243 located at different locations of the enterprise to its corresponding premise based switch. Voice communications between the two locations can be supported using communication path 261 via the corporate WAN 220 and/or using communication path 262 via PSTN 230. Once the VolP service disrupting event 260 is cleared, the voice communications between the two locations can again then be carried over VolP network 210 by deactivating the two premise based VolP switches.

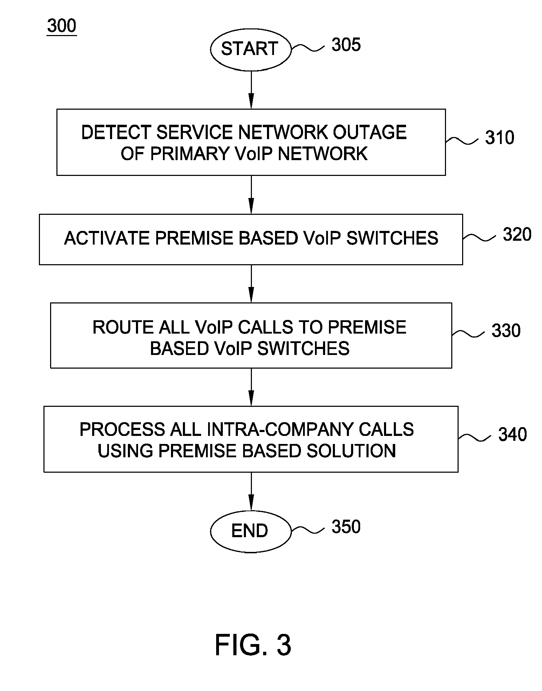

FIG. 3 illustrates a flowchart of a method 300 for enabling local survivability, e.g., intra-company voice communication survivability, during network disruptions using premise based VolP solutions in a VolP network. Method 300 starts in step 305 and proceeds to step 310.

In step 310, the method 300 detects an outage of the primary packet network, e.g., a VoIP network. In step 320, the method activates all premise based switches, e.g., VoIP switches, to enable backup voice communications using the premise based solution, e.g., premise based VoIP solution. In step 330, the method routes all calls to the premise based VoIP switches. In step 340, the method processes all intra-company calls using the premise based VoIP solution over corporate WAN and/or PSTN until the disruption is cleared. The method ends in step 350.

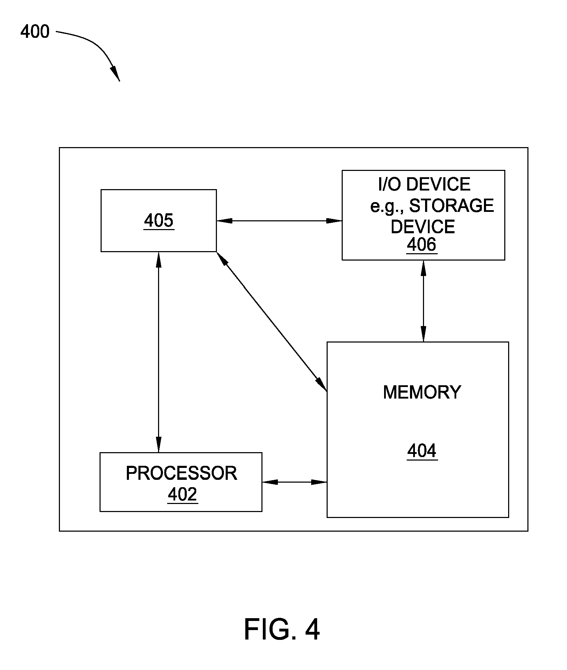

FIG. 4 depicts a high level block diagram of a general purpose computer suitable for use in performing the functions described herein. As depicted in FIG. 4, the system 400 comprises a processor element 402 (e.g., a CPU), a memory 404, e.g., random access memory (RAM) and/or read only memory (ROM), a local survivability premise based solution module 405, and various input/output devices 406 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present local survivability premise based solution module or process 405 can be loaded into memory 404 and executed by processor 402 to implement the functions as discussed above. As such, the present local survivability premise based solution process 405 (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for maintaining a communication service for an enterprise during a network disruption in a communication network, comprising:
detecting a service outage in the communication network; and
routing intra-enterprise calls using a plurality of premise based switches of said enterprise via at least one alternate communication network.

2. The method of claim 1, wherein said communication network is a Voice over Internet Protocol (VoIP) network or a Service over Internet Protocol (SoIP) network.

3. The method of claim 1, wherein each of said plurality of premise based switches is located in a different location of said enterprise.

4. The method of claim 1, wherein said at least one alternate communication network comprises at least one of: a corporate Local Area Network (LAN), a Wide Area Network (WAN), and a Public Switched Telephone Network (PSTN).

5. The method of claim 1, wherein said detecting further comprises:
activating said plurality of premise based switches after said service outage of said communication network is detected.

6. The method of claim 1, wherein said plurality of premise based switches is a plurality of premise based Voice over Internet Protocol (VolP) switches.

7. The method of claim 3, wherein said intra-enterprise calls are redirected by a premise based Internet Protocol router located at each of said different locations to one of said plurality of premise based switches.

8. A computer-readable medium having stored thereon a plurality of instructions, the plurality of instructions including instructions which, when executed by a processor, cause the processor to perform the steps of a method for maintaining a communication service for an enterprise during a network disruption in a communication network, comprising:
detecting a service outage in the communication network; and
routing intra-enterprise calls using a plurality of premise based switches of said enterprise via at least one alternate communication network.

9. The computer-readable medium of claim 8, wherein said communication network is a Voice over Internet Protocol (VoIP) network or a Service over Internet Protocol (SoIP) network.

10. The computer-readable medium of claim 8, wherein each of said plurality of premise based switches is located in a different location of said enterprise.

11. The computer-readable medium of claim 8, wherein said at least one alternate communication network comprises at least one of: a corporate Local Area Network (LAN), a Wide Area Network (WAN), and a Public Switched Telephone Network (PSTN).

12. The computer-readable medium of claim 8, wherein said detecting further comprises:
activating said plurality of premise based switches after said service outage of said communication network is detected.

13. The computer-readable medium of claim 8, wherein said plurality of premise based switches is a plurality of premise based Voice over Internet Protocol (VolP) switches.

14. The computer-readable medium of claim 10, wherein said intra-enterprise calls are redirected by a premise based Internet Protocol router located at each of said different locations to one of said plurality of premise based switches.

15. An apparatus for maintaining a communication service for an enterprise during a network disruption in a communication network, comprising:
means for detecting a service outage in the communication network; and
means for routing intra-enterprise calls using a plurality of premise based switches of said enterprise via at least one alternate communication network.

16. The apparatus of claim 15, wherein said communication network is a Voice over Internet Protocol (VoIP) network or a Service over Internet Protocol (SoIP) network.

17. The apparatus of claim 15, wherein each of said plurality of premise based switches is located in a different location of said enterprise.

18. The apparatus of claim 15, wherein said at least one alternate communication network comprises at least one of: a corporate Local Area Network (LAN), a Wide Area Network (WAN), and a Public Switched Telephone Network (PSTN).

19. The apparatus of claim 15, wherein said detecting means activates said plurality of premise based switches after said service outage of said communication network is detected.

20. The apparatus of claim 17, wherein said intra-enterprise calls are redirected by a premise based Internet Protocol router located at each of said different locations to one of said plurality of premise based switches.
